# EUROPEAN PATENT SPECIFICATION

(11) **EP 3 379 106 B1**
(45) Date of publication and mention of the grant of the patent: **28.10.2020**
(21) Application number: 17162690.6
(22) Date of filing: 23.03.2017
(51) Int. Cl.: F16H 55/14, F16D 3/78, F16H 55/18, F16H 55/12, F16H 57/08, F16H 55/17

(54) **COMPOUND PLANET GEAR ARRANGEMENT AND GEAR WHEEL ARRANGEMENT**
VERBUNDPLANETENGETRIEBEANORDNUNG UND ZAHNRADANORDNUNG
DISPOSITIF D'ENGRENAGE PLANÉTAIRE COMPOSÉ ET AGENCEMENT DE ROUE D'ENGRENAGE

(43) Date of publication of application: 26.09.2018
(73) Proprietor: Cascade Drives AB, 114 28 Stockholm (SE)
(72) Inventor: LUNDBÄCK, Stig, 185 92 Vaxholm (SE)
(74) Representative: Kransell & Wennborg KB

(56) References cited:
- WO-A1-96/41087
- DE-A1-102010 056 068
- DE-B- 1 038 086
- DE-B- 1 243 924
- GB-A- 749 175
- US-A- 2 307 129
- US-A- 5 174 169

## Description

### TECHNICAL FIELD

The invention relates to gear wheel arrangements having enhanced torsional compliance capabilities, which gear wheel arrangements advantageously may be used in compound planet gear arrangements and also at other applications such as at other over-determined systems or where intermittent loads and forces occur.

### BACKGROUND

There are many applications where there exists a need for transforming rotational motion or torque into another rotational motion and torque. In most cases some kind of planetary and compound planetary gear arrangements may be used for such rotation to rotation arrangements.

Examples of such applications are devices as wind and fluid power mills where it is necessary to transform high torque at low RPM to lower torque with higher RPM or gas turbines with high RPM to lower RPM with higher torque.

In other driving examples such as combustion engines or electric motors in cars and trucks and other transport means on land, sea and in the air, these driving arrangements are in many cases using gearboxes often with shift in gear ratio to convert high RPM and low torque to high torque with low RPM in order to maintain a powerful and a efficient energy transformation.

The present invention has similarities with the well-known planetary gear constructions, but is equipped with new inventions that make it possible to create very compact light-weighted gearboxes with high gear ratio and possibilities to shift gear ratio and free wheel arrangement with marginal or no change in volume and weight of the gearbox. This can be of special interest when electric motors are used to power trucks and entrepreneur machines and other machines and arrangements during high forces as is needed during fast accelerations and retardations.

At gear arrangements, such as planetary gears, where the transmitted torque is split between several gear components there exists a problem with over determination of the gear arrangement. Such over determination may lead to unbalanced load and uneven wear of the gear components. The present invention is concerned not only with solving problems related to over determination but also to provide shock absorption to reduce transient forces occurring in the gear arrangement when the transmitted forces through the gear arrangement changes drastically. At these types of gear arrangements it is of vital interest that the entire arrangement is durable and has a long and predictable service life. A further important aspect is that volume-weight is as low as possible to the gear-ratio and that the gearboxes should be easy to assembly and maintain.

The present invention may be used at various applications of the above mentioned type and also in others. An application of certain interest to demonstrate how the present invention can improve the functionality of gear arrangement is the wind power generation industry. In this industry planetary gearboxes play a central part of the driveline from the turbine or rotor blades to the generator for generation of electrical power.

Turbulent winds changes due to large masses in motions, the propeller and generator, give rise to sudden and strong changes of the force direction through the gearbox. This change of direction together with the air gap and stiffness within the gearbox drive train results in shock waves and high overloads on the meshing teeth and in the bearings. Metal contacts between the gear teeth, will contaminate the oil in the gearbox. Optimizing oil qualities to RPM viscosities and cleanness is very important. To extend the lifetime even further it is necessary to create gearboxes where vulnerable parts can be replaced in place with new better optimized components, such as bearings and gears.

Furthermore, as described in NREL Conference paper; NREL/CP-5000-55355; "Dynamic Analysis of Wind Turbine Planetary Gears Using an Extended Harmonic Balance Approach, ", Preprint dated June 2012, by Y. Guo, J. Keller and R. Parker, transient forces is very common in windmills and might have a negative lifetime factor on this kind of arrangement to achieve even distributions of split torque through the gearboxes.

The cause of the low lifetime of windmill gearboxes is still not fully known though many different kinds of epicyclical gearboxes have been tested. Many windmill manufacturers are today looking for direct driven permanent magnet though they become very large, heavy and expensive using earth metal that is a limited recourse.

A gearbox is a device for power transmission which changes the rotation speed, torque and / or rotation from one rotating shaft to another. This power transfer between the axles is usually made through a collaborative meshing between two cylindrical gears. This means that only two tooth sides at a time with the rolling and sliding movements transmit the current torque. The meshing must, with its two mating tooth flanks, be dimensioned for the torque transmitted between the gears. This may be done by varying the gear diameter, width and meshing. Gear materials and hardness of the tooth flanks as well as the oil that lubricates the gearbox naturally constitute extremely important factors for increased strength and increased resistance to mechanical abrasions. In cylindrical gear boxes an upshifting occurs when a larger diameter driving gear meshes with a gear with smaller diameter driven gear. Correspondingly, downshifting occurs when a smaller diameter driving gear meshes with a larger diameter driven gear. At applications requiring high up- or downshifts, several gear steps can be needed. A first step of e.g. 1: 5 could be complemented by a second step of e.g. 1: 5, resulting in a total upshift of 1:25. If two meshing tooth flanks must be adapted for large input torques such as e.g. at extraction of wind energy to generate electrical energy, cylindrical gear arrangements can lead to large and heavy gearboxes in relation to its gear ratio. To avoid this problem various different planetary gearboxes have been suggested for providing a compact, energy-dense gear arrangement with high speed ratio, where speed ratio is to be understood as input speed in relation to output speed of the input and output shafts of a gear box.

The planetary gearboxes are built around three types of elements, the planetary gear, planet carrier and the main gear consisting of an outer ring gear or ring wheel and an internal sun gear or sun wheel. With this type of gearbox it is possible to split incoming torques onto several planet gears that are cooperating in transforming torque through the gearbox, between the ring gear and the sun gear.

The planetary gearbox can be made in many ways, but most usually as a single or a compound transmission gearbox. In single planetary gearboxes, a number of single planetary gears transform torque directly between the ring gear and the sun gear.

In compound planetary gear transmissions the torque is transmitted from the ring gear to the sun gear via a number of planetary gear sets, each planetary gear set comprising at least two planetary gears one of which is meshing with the ring gear and one of which is meshing with the sun gear. The planetary gears in each set may, in compound planetary gearboxes, either be in meshing contact with each other or, as in stepped compound planetary gearboxes, be fixed to each other by means of a common shaft. Such compound planetary gear arrangements can generate higher speed ratio than single planetary transmission gear boxes but these arrangement need very high machine tolerances not to wear out to fast.

The planetary gear box carrier can be connected to the transmission input/output shaft, and thus, with a fixed ring gear, transform torque through its rotating planetary gears to the sun gear and its connection to the output/input shaft. In other examples, the carrier may be fixed to the gearbox which in turn means that the ring gear is connected to the gearbox input/output shaft. The rotating ring wheel conveys thus torque through the fixed planetary carrier with its rotating planetary gears that transform torque to the sun gear that is connected to the output/input shaft.

It is extremely important with split transmission that the transforming of torque is evenly distributed onto the cog flanks that are involved.

With three planetary gears used in a single planetary gear box construction, the sun gear can be centred through the three planetary gear tooth flanks, and by physical and geometric reasons give possibilities to generate even force transmission distribution between the ring gear and sun gear. However these solutions are not so often used due to other problems.

In many planetary gear boxes, used for wind turbines, cars etc., three and even four planetary gears in as a compound first gear step are used often in such combinations that involved shafts and cog-wheels are milled an cut in one peas in extreme precision to try to avoid over determination, that further limits the why how the total gearbox can be built and assembled - low logistic possibilities how to optimize assembly and how to make use of space in the whole gearbox transmission. This and further problems with over determinations often results in 3 or more gear steps are used to are used to convey incoming primary torque between the ring gear and sun gear into moderate gear ratio as e.g. 1:68

With three planetary gears in a single transmission gearbox it is possible with internal gearing of the ring wheel, to achieve a gear ratio of about 1:12. At this high gear ratio the sun wheels and its shaft will be disproportional in size and thus usually lower gear ratios are used in practice. With four planetary gears in a single planetary gearbox it may be possible to accomplish a gear ratio of about 1:5,2, with six planetary gears approx. 1:2,5 and with eight planetary gears approx. 1:2, before the planetary gears starts to hit each other.

### PRIOR ART

US patent 6,459,165 concerns wind power generation and discloses a two-stage planetary gearbox with three planet gears in each step. The rotating planet carrier of the first stage transmits torque through three planetary gears to a sun gear centred through the planetary gear tooth flanks. This sun gear conveys further the torque via a driving mean to rotate the planet carrier in the in a second step that trough three additional planetary gears transform tongue to a sun wheel attached to a shaft powering the generator at a total gear ratio of approximately 1:16. In other patens similar arrangements are further equipped with another planet gear stage and or fixed-axis gear systems to improve the gear rate and reduce the size, weight and cost of the generator. By such arrangements with three planet gears the first sun gear, the second planet carrier with its three planets and helical cut cogs will create free floating unit centred and stabilized by only the cog wheel flanks.

In theory, the above arrangement should not involve over determination problems but gravity may be a certain concern.

Another downside to use only three planetary gears in the first step is that a large primary torque only can be divided on to three pairs of cog wheel flanks which require large cog wheel diameters and sizes to cope with torque that is transformed over three planetary wheels and the sun wheel. The load onto the bearings will be high resulting in bearings having larger sizes and diameters that even can be larger than the gear itself, if not hydro mechanical plain bearings are used. Further, larger diameter ball or roller bearings reduce their tolerances to RPM according to an exponential function.

In other planetary gear boxes, used for wind turbines, cars etc, four planetary gears in 1-3 steps are used to convey incoming primary torque between the ring gear and sun gear. Splitting the incoming torque into 4 pathways through the gearbox will decrease the sizes of the gears and bearings but will also reduce the gear ratio to be about 1:4. Further, in these cases there are no possibilities to have a free floating sun gear. Instead, even load distribution is here sought to be achieved by increasing the precision in the manufacture of gears, shafts, bearings, centring, elasticity, etc.

In order to further minimize over determinations, gear shafts some times are equipped with a flex pin arrangement such as disclosed in U.S. Pat. No. 3,303,713.

Single step planetary gear arrangements comprising four planetary gears allow, due to geometrical reasons, gear ratios at a maximum of about 1: 5,2 and in practice usually a gear ratio of 1:4 is achieved. When arranged as a two step gear arrangement this will give a gear ratio of 1:16. In order to improve the gear ratio and reduce the size of the driven generator a third planetary gear stage may be added such as disclosed e.g. US patent 8,907,517. In other known arrangements, a third gear step may be arranged as a fixed axis gear system that also solves the other big issue in gear trains concerning wind power to have a central open contact through the hole in central shaft for power support and control of the wind turbine.

Compound planetary gearboxes, sometimes referred to as hybrid stepped planetary solutions, have two linked planetary gears, a primary and a secondary, with different diameters, fixed onto one common shaft in one compound gear step. This arrangement transform torque with high theoretical gear ratio, but with consideration of other issues concerning the gearbox, the gear ratio with three pairs of linked planetary gears in practice will be in a region of 1:15 to 1:20.

Even though such compound stepped planetary gear arrangements theoretically exhibits great gear ratios, compact constructions, high energy densities and high speed ratios, the stepped planetary gears have not in practice been used to a large extend within e.g. the windmill industry. It has turned out that such known stepped gear arrangements frequently exhibits the following problems:
They require very precise machining and measurements to prevent over determination, due to double meshing contacts between two different gears with an exact fixation to one common shaft makes manufacturing and assembling more difficult and results in greater risks of failure.

Stepped planetary gears with four planets at the same level will reduce the gear rate and make this solution less attractive.

US 2010/0113210 A1 discloses a compound planetary gearbox where the secondary planet gears are stacked in two axial levels thus creating a split torque from an internally geared ring wheel to a central sun gear. The document discusses the problem of over determination but fails to suggest at a satisfactory solution usable for all embodiments described therein.

In US 8,734,289 B2 a plurality of identically shaped first and second planet shafts equipped with a primary and a secondary planet gear that are stacked both in axial and with the second planet shaft in radial directions forming a sector to transform split torque from an external ring gear to a central sun gear. Smaller diameter gears will provide better machining and measuring conditions to achieve even flank pressures on the involved gears. The drawback is an extra gear step to achieve the same gear rate as e.g. is described in US 2010/0113210.

US 2003/0015052 A1 presents a gearbox with a plurality of identically shaped first, second and third planet shafts equipped with a primary and a secondary planet gear where the first and second planet shafts with their planets are stacked on both sides of an externally cut ring gear, forming two sectors with two first planet shafts that with their planet gears are meshed together with the planet gears of the second planet shaft and where these two sectors are mashed together with the third planet shaft and its planet gears to transform half of the torque generated by the ring gear as split torque to a driving shaft of an generator.

Stacking the second planetary gears in two levels improve the possibilities to achieve high speed ratios and double the split torque gear functions through the gearbox, but will result in that six, eight or more cogwheels in further different positions in the gearbox have to be secured to mesh with even cog-flank pressures.

At higher torques to be transmitted through the gearbox, at least one of the gears has to be fixated to the shaft by e.g. splines that further dramatically increase the risk of misalignment and create over determinations of one or many cog-flanks.

Larger cogwheels are difficult to measure and adjust to have exact masking parameters.

US 2010/0240490 A1 discloses a planetary gear unit. It comprises split planet gears with two sub gears of equal diameter which are mutually preloaded relative to each other by spring bars arranged parallel to the planetary axis of rotation. The arrangement is said to result in a backlash-free planetary gear unit.

A damage report concerning all Swedish windmills made by the Swedish Elforsk report 10:50 2011 and CIRP Annals - Manufacturing Technology 61 (2012) 611-634 concluded that the gearboxes generally not lasted longer than about half the promised service life of 20 years. The result shows that the gearbox designers fails to take all the internal dynamic forces into consideration.

US patent 4,674,351 discloses a compliant gear. The document describes that earlier attempts to create compliant gears to be used for shock absorbance, reduced tolerances requirements between meshing gears and noiseless gears has failed due to lack of radial stiffness to maintain centreline distance between the meshing gears. The document suggests increasing the radial stiffness of the compliant gear by intrusion of rigid shim as sandwich construction between a compliant laminate. That was followed by other similar constructions like US 4831 897A or just by providing the gear with bendable sprockets inside cogwheel WO2007119074A1 or in a hub connected to the cogwheel as in DE102007053509A1.

US 2,307,129 A discloses a gear comprising a central hub provide with a pinion and a radial flange. An outer ring with external gear teeth. The outer ring is bonded to an annular rubber-like insert, which in turn is bonded to the radial flange.

DE 10 2010 056068 A1 discloses a planet gear having a number of gear wheel arrangements comprising a first and a second gear wheel. The first gear wheel is fixed to a shaft. The second gear wheel has an inner hub and an outer ring provided with gear teeth. The outer ring is connected to the inner hub by means of a number of radial spokes which allow the outer ring to be resiliently rotated in the circumferential direction relative to the inner hub. The gear arrangement further comprises fixation means for axial fixation of the second gear wheel to the shaft.

Prior art in shifting gear rates using planetary gears can vary in many ways. Using one gear set of planetary gears to create different gear rates is exemplified in US patent 6,935,986B2 were the inventor have focused on how to add brakes and clutches to lock and release the involved ring gears planetary holder in efficient ways in order to create a two speed gearbox and one neural speed.

By adding brakes and clutches to two or more gear sets of planetary gears to lock and release the involved ring gears planetary holder and sun gears in different ways exemplified by the US patent US 9A82,318B2 Nov.1 2016 and its references can serve as prior art of Simpson shifts.

Us patent US 9,073538 B2 can serve as prior art to create, if wanted, a compound planetary gearbox with an additional gearbox to create two different gear ratios using the same electric motor.

### SUMMARY OF THE INVENTION

The problem to be solved by the invention can be regarded as reducing rotational friction between two parts of a gear wheel arrangement, the parts being connected to each other by means of an elastically deformable member.

According to the invention a gear wheel arrangement comprises a first part which is arranged to be rotationally fixed to a shaft and a second part which is rotatably connected to the fist part and provided with gear teeth for meshing with an adjacent gear. The first and second parts are mechanically connected by means of at least one first elastically deformable member which allows a limited relative rotation between the first and second part. The gear teeth of the second part are helical and the gear wheel arrangement is arranged to allow a limited relative axial displacement between the first part and the second part. The gear wheel arrangement further comprises at least one bearing arranged between the first part and the second part for reducing the friction between the first and second part during relative rotation.

By allowing both circumferential and axial relative movement between the first and second part, the gear wheel arrangement provides high torsional compliance which, in addition, may be precisely controlled by providing and selecting suitable elastically deformable means for absorbing relative movement in either or both of the circumferential and axial directions. The gear wheel arrangement is very well suited for applications in planet gear arrangements.

The gear wheel arrangement may comprise at least one first elastically deformable member which is deformed during relative rotational displacement between the first part and the second part.

At least one first elastically deformable member may be arranged to be deformed during relative axial displacement between the first part and the second part.

The gear wheel arrangement may, comprise at least one second elastically deformable member, which is arranged to be deformed during relative axial displacement between the first part and the second part.

The gear wheel arrangement may comprise at least one bearing arranged between the first part and the second part for reducing the friction between the first and second part during relative rotation.

The first part may comprise a central hub with an axial bore for receiving the shaft and at least one first contact member which is arranged at a radial distance from a central axis of the hub; wherein the second part comprises a annular toothed member with peripheral helical teeth and at least one second contact member; and an elastically deformable member may be arranged between said first and second contact members.

The first part may comprise a radial disc which extends radially from the hub and which carries a number of first contact members extending axially from the radial disc, wherein the second part comprises at least one carrier disc which is fixed to the toothed member and which exhibits a corresponding number of recesses and an annular elastically deformable member may be received in each recess and about each first contact member.

The second part may comprise two carrier discs arranged at opposite axial sides of the radial disc.

The gear wheel arrangement may comprise adjustment means for adjusting the nominal relative rotational position between the gear teeth of the second part and the shaft.

The at least one first elastically deformable member may comprise a polymer material.

The at least one first elastically deformable member may comprise a torsional spring.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

In the following, exemplifying embodiments of the invention will be given with reference to the attached drawings, in which,
Fig. 1a is a perspective view of a non-claimed compound gear; arrangement, where certain components of the gear arrangement have been removed. Fig. 1b shows a section in perspective view of the arrangement shown in fig. 1a and shows and exploded perspective view thereof.
Fig. 2 is a section through a non-claimed gear arrangement
Fig. 3a is a section trough a further non-claimed gear arrangement, fig. 3b is an exploded sectional view showing parts thereof, fig. 3c is a corresponding elevational view and fig 3d is a section illustrating a detail thereof in enlarged scale.
Fig. 4a is an exploded section showing a further non-claimed gear arrangement and fig. 4b is an elevational view thereof.
Fig. 5 is a partly exploded section illustrating a further non-claimed gear arrangement.
Fig. 6 is a section illustrating a further non-claimed gear arrangement.
Fig. 7 is a non-claimed schematic sketch.
Fig. 8a is a perspective view showing an embodiment of a gear wheel arrangement according to an; embodiment of the invention.
Fig. 9 is a section in perspective view illustrating another embodiment of a gear wheel arrangement according to the invention.
Fig. 10a is a perspective view of illustrating a further embodiment of the gear wheel arrangement, fig. 10b is a corresponding view with some components removed and fig 10c. is a section thereof.

### DETAILED DESCRIPTION OF EMBODIMENTS

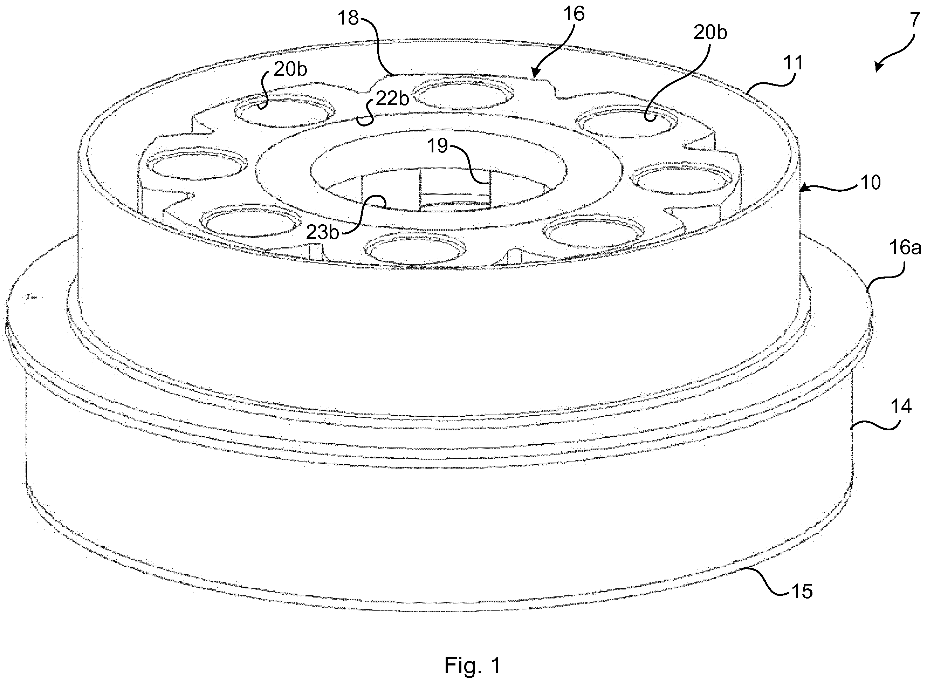

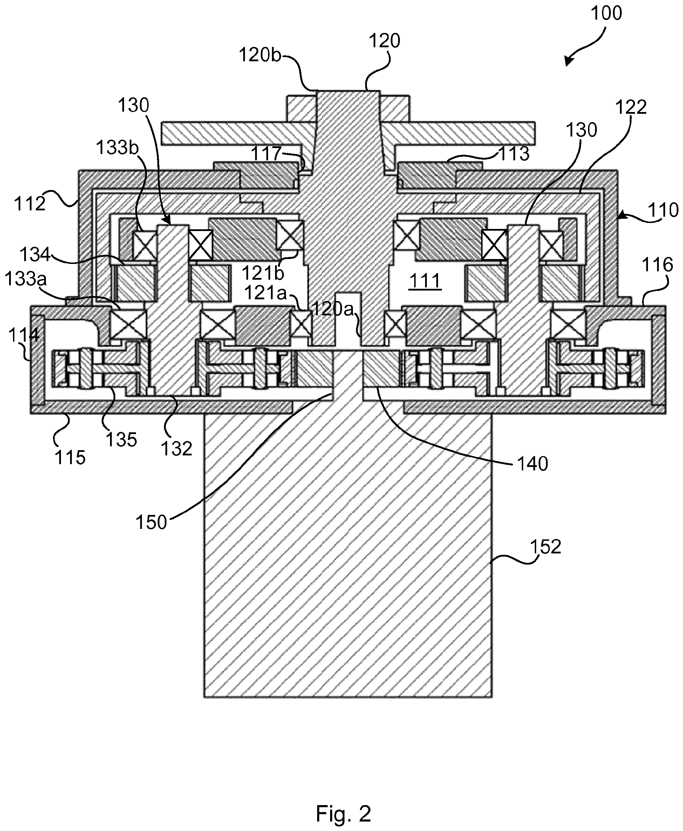

Fig. 1a-c and 2 illustrate schematically a compound planet gear arrangement.

Fig. 1a-c show some structural components of the gear arrangement. In fig. 1a-c the rotational planet gear components have been removed for increased clarity. Thus, even though not shown in figs. 1a-c, the gear arrangement 10 comprises a central first in- or output shaft which is fixed to a ring gear and eight planet gear units. Each planet gear unit comprises a planet gear shaft, a primary gear meshing with the ring gear and a secondary gear which meshes with a sun wheel connected to a second in- or output shaft.

As shown in figs. 1a-c, the gear arrangement 10 also comprises a housing 10, which comprises a number modular housing components which are arranged to be assembled sequentially one to the other from the axial centre of the gear arrangement outwardly in both axial directions. These modular components comprise a first end cap 12 which includes a cylindrical wall and a first end wall, which has been removed in figs. 1a-c and which exhibits a central access opening which receives a removable mounting disc with a first shaft opening, through which the first in- or output shaft extends when mounted. The housing further comprises a second end cap 14 with a removable circular second end wall 15 which exhibits a second shaft opening 15a through which a second in- or output shaft (not shown) extends when mounted. The first 11 and second end caps 14 are mounted to a radial flange 16a of a structural body 16 which is arranged in the interior space enclosed by the housing 10. The structural body 16 is formed in one piece, typically by casting and is machined for precise positioning and fixation of the rotational gear components. The structural body 16comprises a first generally disc-shaped body portion 17 and a second generally disc-shaped body portion 18. The first 17 and second 18 body portions are axially separated by means of a number of axially extending distance portions 19. In the shown example the distance portions 19 are joined to form and a generally annular integral distance portion. The distance portions may however be separated from each other.

The structural body 16 exhibits a number of axial planet shaft bores 20a, 20b. The planet shaft bores are arranged in pairs each pair comprising a first planet shaft bore 20a arranged in the first body portion 17 and a second planet shaft bore 20b arranged in the second body portion 18. The planet shaft bores 20a, 20b of each pair are axially aligned and arranged at an axial distance corresponding to the distance between the first 17 and second 18 body portions. Each first planet shaft bore 20a is arranged to define the position of a first bearings by which a respective planet shaft is journaled to the first body portion of the structural body 16. Each second planet shaft bore 20b is, in a corresponding manner, arranged to define the position of a second bearing by which the respective planet shaft is journaled to the second body portion 18. A first annular insert 21 is received in each first planet shaft bore 20a. The first annular inserts 21 allows for that a planet gear unit comprising a primary gear, which has a diameter that is larger than the dimeter of the lower planet shaft bearings may be introduced from beneath through the first planet shaft bore 20as. After insertion of the primary gear between the first 17 and second 18 body portions the insert 21 may be inserted to the first planet shaft bore 20a such that a corresponding planet shaft bearing is received in the insert and thereby fixed in position to the structural body.

The first 17 and second 18 body portions each exhibits a first in- or output shaft bore 22a, 22b for precise positioning of first and second bearings respectively, by which the first in- or output shaft is journaled to the structural body 16. In the shown example, both first in- or output shaft bores 22a, 22b receives a respective annular insert 23a, 23b. When these annular inserts 23a, 23b are removed, the large first in- or output shaft bores 22a, 22b enhances access to the central portion of the gear arrangement 10 such that the assembly, de-assembly and maintenance is greatly facilitated. The inner diameters of the annular inserts 23a, 23b are chosen such that the first in- or output bearings are precisely positioned and securely fixed to the structural body when received in the annular inserts. In the shown example, both first in- or output shaft bores 22a, 22b with annular inserts 23a, 23b are arranged to receive a respective first in- or output shaft bearing. At some examples however it suffices that only the lower first in- or output shaft bore 22a receives a first in- or output shaft bearing, with or without an annular insert 23a. At such examples the central bore arranged in the upper second body portioni8 may be used for positioning and fixation of other components of the gear arrangement. It should be noted however that preferably, the central bore of the first centrally arranged body portion should always constitute a first in- or output shaft bore for receiving a first in- or output bearing. This is the case since the first body portion 17 is arranged at a comparatively large axial distance from the axial ends of the housing such that it is allowed to position this first in- or output shaft bearing at a great axial distance of any other first in- or output shaft bearing arranged inside or outside the housing. The great axial distance between two first in- or output shaft bearings results in a very stable and secure fixation of the first in- or output shaft which in turn reduces radial movements of the first in- or output shaft and the further gear components.

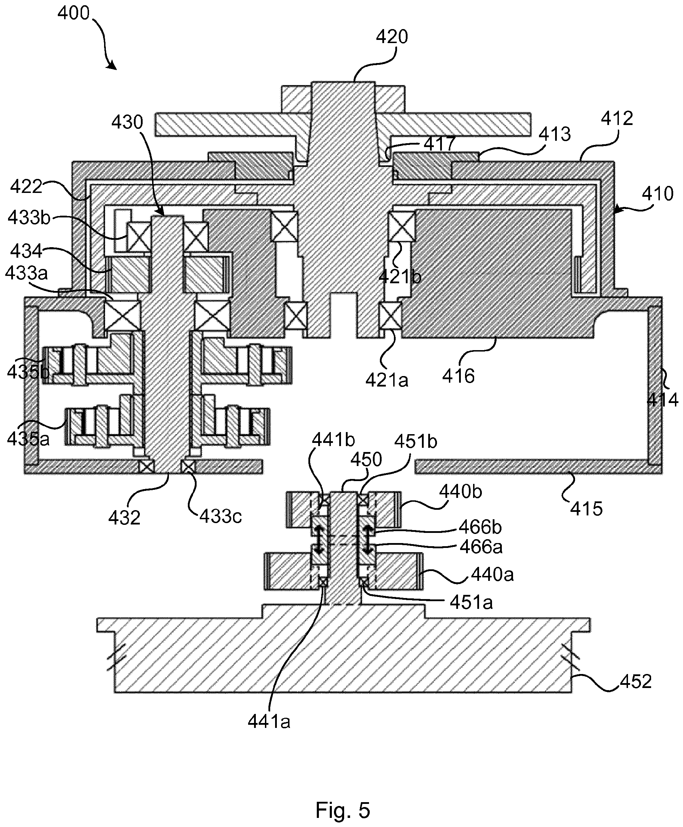

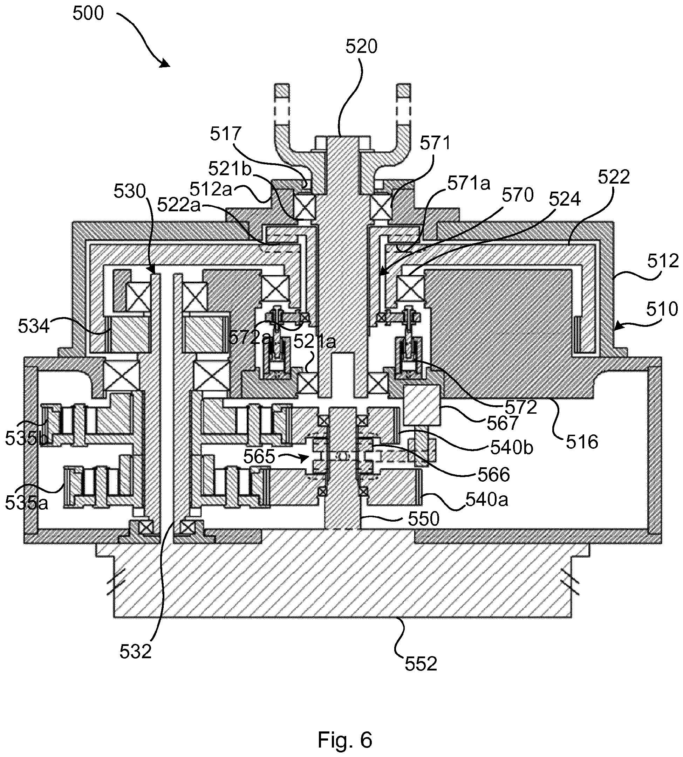

In the shown example the second axial end wall 15 exhibits a number of end wall bores 24 which number corresponds to the number of pairs of planet shaft bores 20a, 20b. An annular insert 25 is received in each end wall bore 24. Each end wall bore 24 with annular insert 25 is arranged to position and fixate a third planet shaft bearing which, at some examples of the gear arrangement, is arranged at the lower end of each planet shaft. Such examples are shown in figs 5 and 6. When mounting the planet gear shafts, the end wall 15 is removed and the planet gear shaft with upper planet shaft bearing and primary gear is introduced through the first planet shaft bore 20a as described above. When the upper planet shaft bearing has been received and fixated in the second planet shaft bore 20b and the lower planet shaft bearing is received in the first planet shaft bore 20a, the annular insert 21 is threaded onto the lower bearing and introduced into the first planet shaft bore 20a. Thereby the entire planet gear unit has been precisely positioned with respect to the structural member 16 and secured thereto. Thereafter the secondary planet gears are threaded onto the respective planet gear shafts and fixated thereto. When this has been competed for all planet gear units, the end wall may be mounted such that the third planet shaft bearings are received in a respective end wall bore 24. Then the annular insert 25 is threaded onto the third planet shaft bearing and introduced in the end wall bore for a final fixation of the third planet shaft bearing.

The above described arrangement for positioning and fixation of the planet units and the first in- or output shaft and their bearings allows for that the positions of all so mounted components are defined by a single, one piece component, i.e. the structural body 16. All bearing seats and other guiding surfaces may thus be formed by machining a single work piece. By this means the accuracy in relative positioning between the components is greatly enhanced. This is an important advantage since even small deviations in relative positioning of the components may greatly reduce the load capability and service life of the gear arrangement. An additional important advantage of the above described arrangement is that the structural body 16 may be designed with minimum of material while still providing satisfying stability and load resistance. Hereby, the weight of the structural body 16 and the entire gear arrangement may be kept at a minimum at the same time as the available interior space within the housing may be increased. Also this later is an important advantage since it provides great possibilities to freely dimension the shafts, bearings, gears and other components for optimizing the performance such as the gear ratio, the load capability and the like.

In fig. 2 a second example is illustrated. The gear arrangement 100 according to this example comprises a housing 110 which encloses an interior space 112. The housing is rotational symmetric with regard to a longitudinal centre axis and comprises a number of modular parts including a first end cap 112 with a centrally arranged mounting disc 113 and a second end cap 114 with a removable circular end wall 115. The first 112 and second 114 end caps are fixed to and enclose a structural body 116 such that the body 116 is at least partly arranged in the interior space 111.

A first in- or output shaft 120 extends through a first central shaft opening 117 arranged in the mounting disc 113 of the first end cap 112. The first in- or output shaft is journaled in central bearings 121a, 121b in the body 116. The central bearings comprise a first bearing 121a, which is arranged in proximity to a first end 120a of the in- our output shaft, which first end is arranged in the interior space 111. The first in- or output shaft 120 is also journaled to the body 116 by a second central bearing 121b, which is arranged at an axial distance from the first central bearing 121a in proximity to the first entrance opening 117.

The first in- or output shaft 120 is fixed to a ring gear 122 which rotates together with the first in- or output shaft 120.

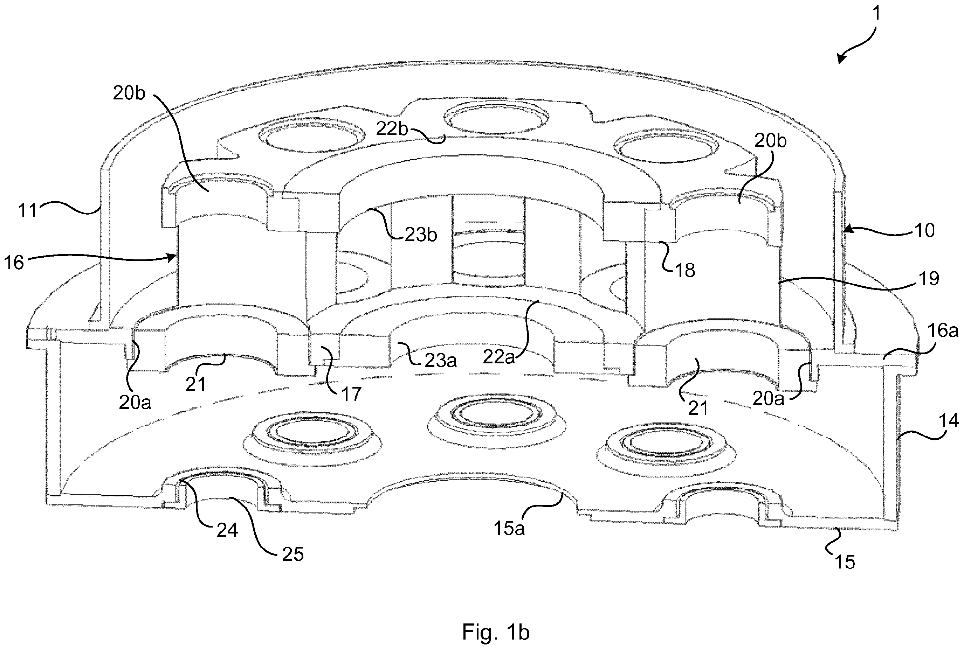

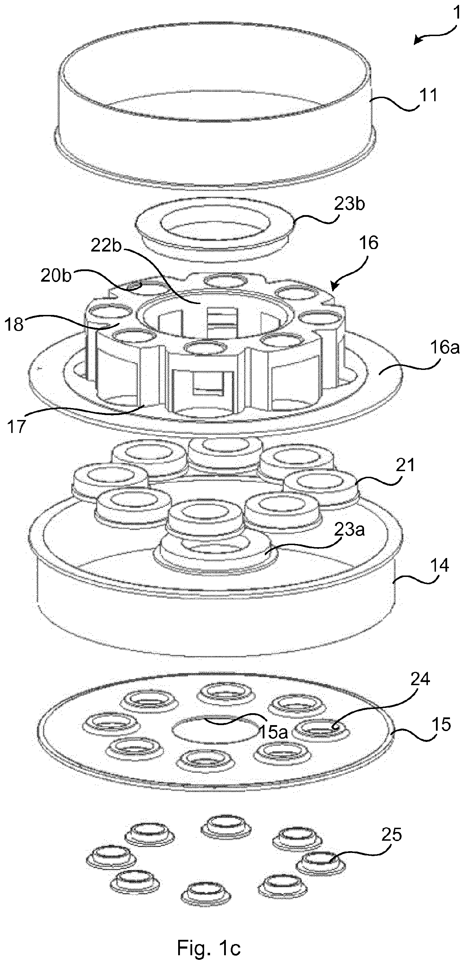

The gear arrangement further comprises a number of planet gear units 130. In the shown schematic cross section, two such planet gear units are illustrated. The number of planet gear units may however be varied freely. Typically the gear arrangement comprises 2, 3, 4 or any number up to 8 planet gear units. In the following one of the plane gear units 130 is described and it is understood that all planet gear units are configured and arranged in the same manner. Each planet gear unit comprises a planet shaft 132 which is journaled in bearings 133a, 133b in the body 116. As seen in fig. 1, the planet bearings comprises a first, lower bearing 133a which is arranged essentially at the same axial level as the first central bearing 121a. A second planet bearing 133b is arranged at an axial distance from the first planet bearing 133a and in proximity to an upper end of the planet shaft 132.

The planet gear unit 130 further comprises a primary gear 134 which is rotationally fixed to the planet shaft 132. The primary gear 134 exhibits primary planet teeth which mesh with corresponding teeth of the ring gear 122. A secondary planet gear 135 is rotationally fixed to the planet shaft 132, in proximity to a lower end of the planet shaft 132, such the first planet bearing 133a is arranged axially between the primary gear 134 and the secondary planet gear 135. The secondary planet gear 135 is provided with secondary planet teeth which mesh with corresponding teeth of a sun wheel 140, which is axially aligned with the first in- or output shaft 120. In the example shown in fig. 2, the sun wheel 140 is rotationally fixed to a second in- or output shaft 150 which constitutes shaft of a rotating electrical machine such as a motor or a generator 152.

As readily understood the sun wheel 140 thus meshes with all secondary planet gears 135 and the torque transmitted between the first in- or output shaft 120 and the second in- or out put shaft is distributed between all planet gear units 130.

The secondary planet gear 135 of each planet unit 130 is further connected to the respective primary planet gear 134 by means of a transmission arrangement which is arranged to allow a limited elastic rotation of the secondary planet teeth in relation to the primary planet teeth. This transmission arrangement allows for that the total load of the gear arrangement will be evenly distributed between all cog flanks which are simultaneously in engagement during transmission of torque. Additionally, the transmission arrangement allows for that intermittent fluctuations in the transmitted torque and the corresponding load is absorbed such that heavy and rapid cog flank impacts are reduced. The transmission arrangement and possible variations thereof is described more in detail below.

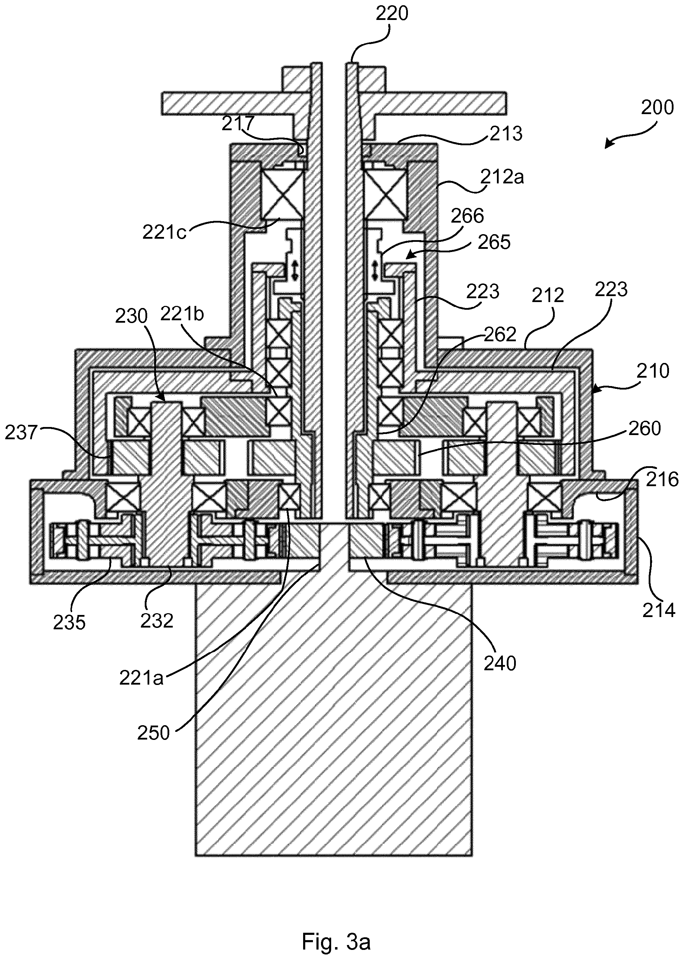

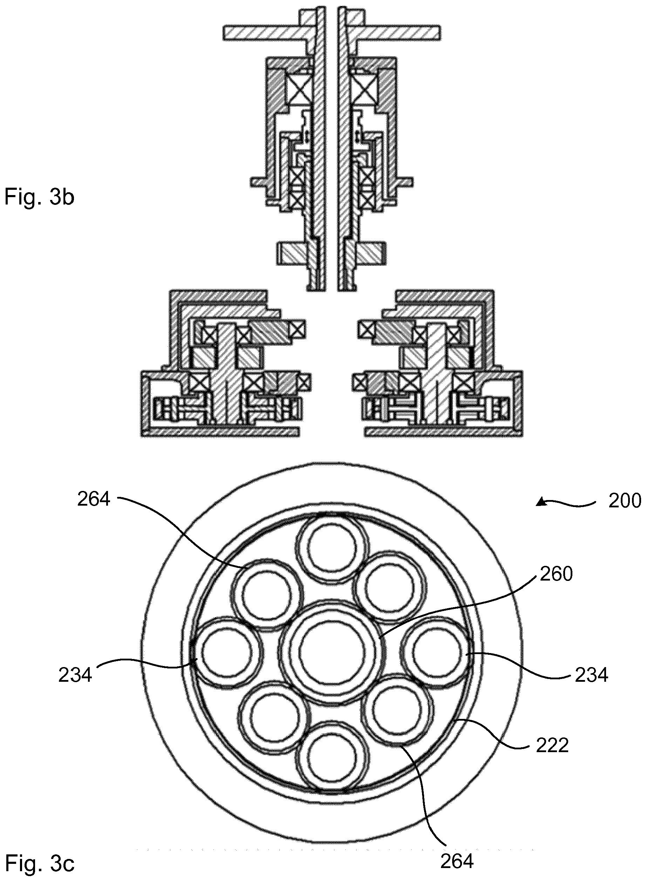

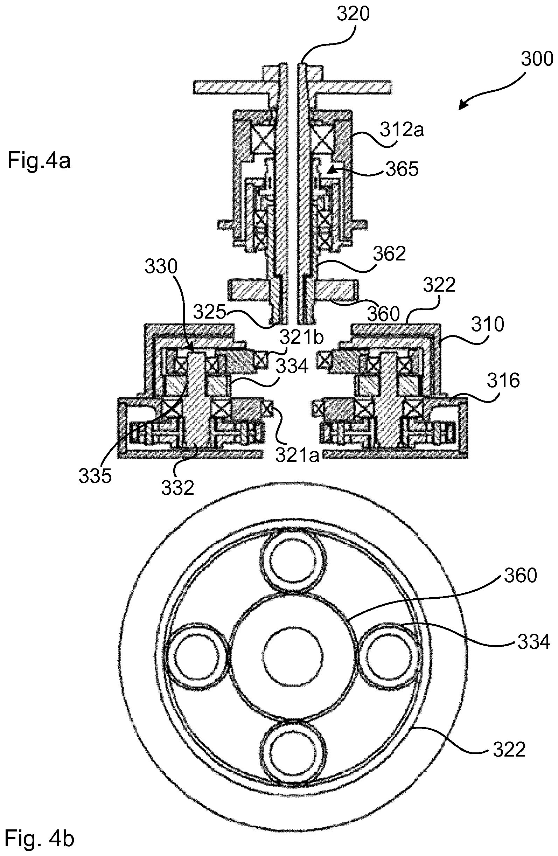

Figs. 3a-d and 4a-b illustrate schematically a compound planet gear arrangement. According to this example, the gear arrangement comprises means for allowing the gear ratio to be altered between two selectable gear ratios.

Fig. 3a-d illustrates; an example and figs. 4a-b a further example. In the embodiment shown in figs. 3a-c the gear arrangement comprises generally the same components as shown in fig. 1. Thus, the gear arrangement 200 comprises a housing 210 with a first end cap 212 and a second end cap 214 which are fixed to and encloses a structural body 216.

A first in- or output shaft 220 extends through a first shaft opening 217 in the first end cap 212. The first in- or output shaft 220 is journaled in the body 216 by means of first 221a and second 221b bearings which are axially spaced from each other.

The gear arrangement 200 comprises four of planet gear units 230, each comprising a planet shaft 232 journaled in the body 216, a primary gear 234 meshing with a ring gear 222 and a secondary gear 235 meshing with a first sun wheel 240. The first sun wheel is rotationally fixed to a second in- or output shaft 250 of a rotating electrical machine 252.

However, at this example a second sun wheel 260 is rotationally fixed to a hollow sleeve member 262 which coaxially receives a lower portion of the first in- or out put shaft 220. The hollow sleeve member 262 is arranged to rotate freely about the first in- or output shaft 220. For this purpose, bearings 225 are arranged between the hollow sleeve member 262 and the first in- or output shaft 220. The sleeve member 262 is further journaled to the structural body 216 by means of bearings 221a, 221b. In this way the sleeve member as well as the first in- or output shaft are rigidly fixated relative to the structural body 216 and they may sustain heavy loads and bending forces. The second sun wheel 260 is operatively connected to the primary gears 234 of all planet units 230. At this example the second sun wheel 260 is indirectly connected to the primary gears 234 by means of respective intermediate gears 264.

The gear arrangement 200 further comprises a clutch arrangement 265 which is arranged to selectively connect the ring wheel 222 or the second sun wheel 260 to the first in- or output shaft 220. The clutch arrangement 265 comprises an engagement member 266 which is rotationally fixed to the first in- or output shaft 220 and axially displaceable relative to the first in-or output shaft 220. In the shown example, the engagement member 266 comprises a hollow sleeve which receives an axial portion of the first in- or output shaft 220. The sleeve and the first in- or output shaft 220 are provided with cooperating splines (not shown) for preventing relative rotation and allowing relative axial displacement them between. The ring gear 222 is fixed to a central ring wheel hub 222a which is arranged concentrically around the first in- or output shaft 220, the hollow sleeve member 262 and the engagement member 266.

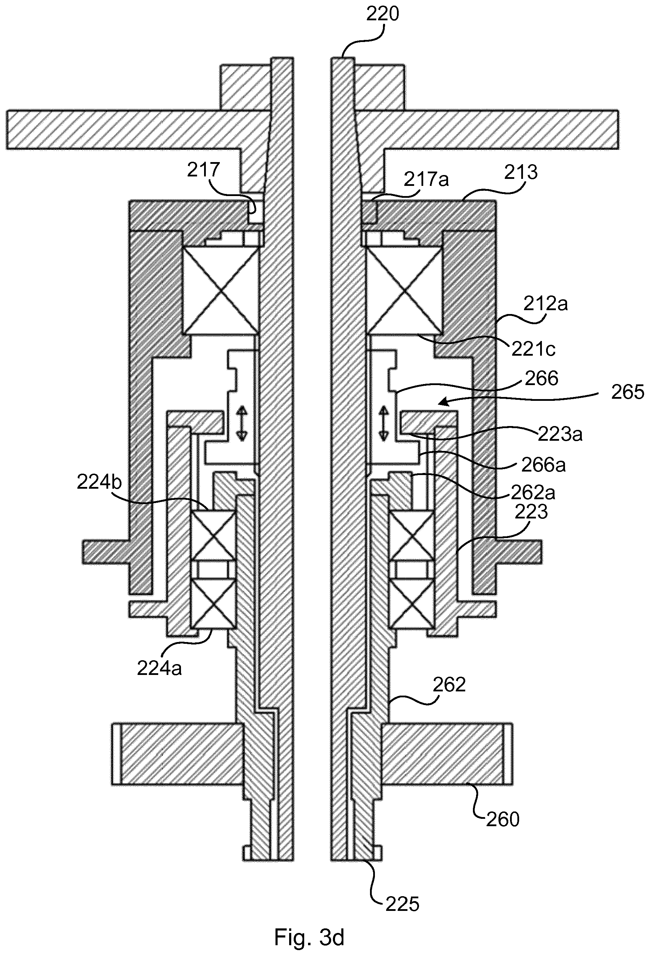

As best seen in fig 3d, the engagement member 266 is provided with engagement means 266a such as teeth, dents or jaws which are arranged to selectively engage corresponding engagement means 266a, 262a on the ring wheel hub 223 and the hollow sleeve member 262 respectively. The clutch arrangement 265 further comprises drive means (not shown) for driving the engagement member 266 in either axial direction. Such drive means may e.g. be hydraulic, electric, pneumatic or the like as known in the art.

The first end cap 212 of the housing 210 comprises an axially protruding cylindrical head 212a which concentrically receives the ring wheel hub 223 and the clutch arrangement 265. A mounting disc 213 is arranged at the free end of the cylindrical head 212a and exhibits the first shaft opening 217. A annular seal 217a is arranged between the first in- or output shaft 220 and the mounting disc 213. The first in- or output shaft is further journaled in the cylindrical head 212a by means of third central bearings 221c which are arranged close to the free end of the cylindrical head 212a.

Additionally, two axially spaced ring wheel bearings 224a, 224b are arranged concentrically between the ring wheel hub 223 and the hollow sleeve member 262. By this means free relative rotation is allowed between the ring wheel 222, the second sun wheel 260 and the first in- or output shaft 220.

Fig. 3a and 3d illustrates the gear arrangement 200 when the clutch arrangement 265 is set in a free spinning mode of operation. At this mode the engagement member 266a is axially positioned in between the corresponding engagement means 223a and 262a of the ring wheel hub 223 and the hollow sleeve member 262 respectively. Hereby the engagement member 266 is disengaged from both of the ring wheel hub 223 and the hollow sleeve member 262 such that rotation of the first input member 220 is not transmitted to either of the ring wheel 222 or the second sun wheel 260 and thereby not to the second in- or output shaft 250. Vice versa, rotation of the second in- or output shaft is transmitted to the planetary gear units 230, the ring wheel 222 and the second sun wheel 260, but not to the first in- or output shaft 220, which thus in this operational mode is allowed to spin freely.

By displacing the engagement member 266a upwardly from the position shown in fig. 3d, the engagement means 266a of the engagement member 266 will be brought into engagement with the corresponding engagement means 223 of the ring wheel hub 223, such that rotational movement will be transmitted between the first 220 and second 260 in- or output shafts via the ring wheel 222, the planet units 230 and the first sun gear 250. Such transmission of rotational movement and torque will occur at a first gear ratio depending on the differences in diameters between the rotational components involved.

By instead displacing the engagement member 266a downwardly from the position shown in fig. 3d, the engagement means 266a of the engagement member 266 will be brought into engagement with the corresponding engagement means 223 of the second sun wheel 260, such that rotational movement will be transmitted between the first 220 and second 260 in- or output shafts via second sun wheel 260, the intermediate gears 264, the planet units 230 and the first sun gear 250. Such transmission of rotational movement and torque will occur at a second gear ratio depending on the differences in diameters between the rotational components involved in this transmission.

It should be noted that, at the example shown in fig. 3a-d rotational movement in one direction of the first in- or output shaft will result in rotation of the second in- or output shaft 250 in a direction which is the same, irrespective of if clutch arrangement 265 is set to an operational mode to involve the ring gear 222 or the second sun wheel 260 for transmitting the rotation and the torques. This occurs due to the intermediate gears 264 which reverse the rotational direction between the second sun wheel and the primary gears 234 in comparison to if the second sun wheel 260 would be arranged to mesh directly with the primary gears 234.

In fig. 4a and 4b an example is illustrated. At this example, the gear arrangement 300 is essentially equal to the gear arrangement 200 shown in figs 3a-d and comprises a housing 310 with a cylindrical head 312a and a body 316. A first in- or output shaft is journaled in bearings in the body 316 and in the cylindrical head 312a. The gear arrangement 300 also comprises four planet gear units 330 and a first sun wheel (not shown) which is connectable to a second in- or output shaft (not shown). A clutch arrangement 365 which is identical to the clutch arrangement 265 shown in fig. 3d is also provided. A second sun wheel 360 is rotationally fixed to a hollow sleeve member 360 rotationally arranged around the first in- or output shaft 320. The sleeve member 360 is journaled to the structural body 316 by means of bearings 321a, 321b and to the first in-or output shaft 320, by means of bearings 325.

However, at this example the second sun wheel 360 is operatively connected directly to the primary gear 234 of each planet unit 330. The second sun wheel 360 thus meshes with these primary gears. By eliminating the intermediate gears, the second sun wheel 260 may be given a larger diameter, thus providing a total gear ration which differs from the gear ration achieved when the second sun wheel of the example shown in figs 3a-d is involved in transmitting rotational movement and torque between the first and second in- or output shafts.

As indicated above, at this example rotation of the first in- or output shaft 330 in a certain direction will result in a rotation of the second in- or output shaft in opposite rotational directions depending on if the clutch arrangement 365 is set to transmit the rotational movement via the ring gear 322 or the second sun gear 360.

Figs. 5 and 6 illustrate schematically a compound planet gear arrangement according to a third; example. According to this example, the gear arrangement comprises alternative means for allowing the gear ratio to be altered between two selectable gear ratios.

Fig. 5 illustrates; an example and fig. 6 still another example. In the example shown in fig. 5 the gear arrangement comprises generally the same components as the example shown in fig. 1.

Thus, the gear arrangement 400 comprises a housing 410 with a first end cap 412 and a second end cap 414 which are fixed to and encloses a body 416.

A first in- or output shaft 420 extends through a first shaft opening 417 in a mounting disc 413 of the first end cap 412. The first in- or output shaft 420 is journaled in the body 416 by means of first 421a and second 421b bearings which are axially spaced from each other.

The gear arrangement 400 comprises three planetary units 430 (only one of which is shown in the section of fig. 5), each comprising a planet shaft 432 journaled in the body 416 by first 433a and second 433b planet bearings. The planet shafts 432 are additionally journaled in the end wall 415 of the second end cap 414, by means of respective third planet bearings 433c. Each planet unit 430 further comprises a primary gear 434 meshing with a ring gear 422, which is rotationally fixed to the first in- or output shaft 420.

Each planet unit 430 comprises a first 435a and a second 435b secondary gear. The secondary gears 435a, 435b are axially aligned and fixed to the planet shaft 432, one above the other. Both secondary gears 435a, 435 are provided with a transmission arrangement which allows a limited elastic rotation of the secondary planet teeth in relation to the primary planet teeth of the respective primary gear 434. The first secondary gear 435a has a diameter which is smaller than the diameter of the second secondary gear 435b.

The gear arrangement further comprises a first 540a and a second 540b sun wheel. Both sun wheels 540a, 540b are rotationally connected to a second in-or output shaft 450 by means of respective bearings 451a, 451b. Each sun wheel 440a, 440b may thus rotate independently relative to each other and to the second in- or output shaft 450. The diameter of the first sun wheel 440a is larger than the diameter of the second sun wheel 440a. The diameters of the sun wheels are adapted such that the first sun wheel meshes with the first secondary gears 435 and the second sun wheel 440b meshes with the second secondary gears 435b. The second in- or output shaft 450 constitutes an in-or output shaft of a rotating electrical machine 452.

A clutch arrangement 465 is arranged to selectively fix either of the sun wheels 440a or 440b to the second in- or output shaft 450 such that relative rotation is prevented between the selected sun wheel and the second in- or output shaft. The clutch arrangement comprises an annular engagement member 466 which receives the second in- or output shaft 450. The second in- or output shaft and the engagement member 466 are provided with cooperating splines such that the engagement member 466 may be axially displaced along the second in- or output shaft 450 but is prevented from rotating relative thereto. The engagement member 466 comprises engagement means 466a, 466b which may be brought into engagement with respective corresponding engagement means 441a and 441b of the first 440a and second 440b sun wheel.

The clutch arrangement further comprises drive means such as hydraulic, electric or pneumatic means for displacing the engagement member between a first lower engagement position and a second upper engagement position. In the first engagement position, the lower engagement means 466a engages the corresponding engagement means 451a of the first sun wheel, whereas the upper engagement means 466b of the engagement member is released from the corresponding engagement means 441b of the second sun wheel 440a. In this position the first sun wheel 440a is rotationally fixed to the second in- or output shaft 450 whereas the second sun wheel 440b may rotate freely relative to the second in- or output shaft 450. At this engagement position a rotational movement will thus be transmitted between the first in- or output shaft 420 and the second in- or output shaft via the ring gear 422, the primary gears 434, the planet shafts 432, the first secondary gears 435a and the first sun wheel 440a at a first gear ratio.

If the engagement member 466 is displace upwardly to a second upper engagement position the upper engagement means 466b engages the corresponding engagement means 451b of the second sun wheel 440b, whereas the lower engagement means 466a of the engagement member is released from the corresponding engagement means 441a of the first sun wheel 440a. In this position the second sun wheel 440b is rotationally fixed to the second in- or output shaft 450, whereas the first sun wheel 440a may rotate freely relative to the second in- or output shaft 450. At this upper engagement position a rotational movement will thus be transmitted between the first in- or output shaft 420 and the second in- or output shaft via the ring gear 422, the primary gears 434, the planet shafts 432, the second secondary gears 435b and the second sun wheel 440b at a second gear ratio, which differs from the first gear ratio.

When the engagement member 466 is displace to an intermediate position between the first and second engagement positions it will not engage any of the sun wheels 440a, 440b, whereby these sun wheels will rotate independently of the second in- or output shaft 550, They will however still mesh with the secondary planet gears 435a, 435b and rotate together with these.

In fig. 6 a further gear arrangement 500 is illustrated. This gear arrangement resembles the arrangement shown in fig. 5 in that it comprises three planet gear units 530, each comprising a planet a shaft 532, a primary gear 534, two secondary gears 535a, 535b, two sun wheels 540a, 540b which are journaled to a second in- or output shaft 550 and a first clutch arrangement 565 for selectively blocking either of the first 540a or second 540b sun wheels from rotation relative to the second in- or output shaft 550. This first clutch arrangement 565 is thus arranged to provide the same possibility to choose one of two gear ratios when transmitting rotational movement and torque between the first 520 and second 550 in- or output shaft as the arrangement shown in fig. 5. Fig. 6 also illustrates an exemplifying drive means 567 for displacing the engagement member 566 upwardly and downwardly between the two engagement positions. In the shown example the drive means comprises an electrical actuator which is fixed to a removable mounting insert 516a which forms part of the structural body 516. The actuator comprises a movable member connected to the engagement member 566.

The gear arrangement 500 is further provided with a free wheeling capability for allowing the first in- or output shaft 520 to rotate freely and independently from the ring gear 522 and the other rotational gear components.

The first in- or output shaft 520 is, at an inner end portion, journaled in an annular mounting insert 516a of the body 516 by means of first central bearing 521a. The housing 510 comprises a first end cap 512 with a head member 512a which is axially closed by means of a mounting disc 513 comprising a first shaft opening 517, through which the first in- or output shaft 520 extends. The first in- or output shaft 520 is journaled in second bearings 521b to the head member 512a.

The ring gear 522 is journaled in the body 516 by means of a ring gear bearing 524. A second clutch arrangement 570 is arranged for selectively connecting and disconnecting the ring gear with and from the first in- or output shaft 520. The second clutch arrangement 570 comprises a hollow engagement member 571 which receives an portion of the first in- or output shaft 520. The engagement member 571 and the first in- or output shaft are provided with cooperating splines for allowing the engagement member to be axially displaced along the first in- or output shaft and to prevent relative rotation them between. The engagement member 571 comprises first engagement means 571a, such as teeth or dog jaws which are arranged to be brought in and out of engagement with corresponding engagement means 522a arranged at the ring gear 522. The second clutch arrangement 570 further comprises actuation means 572 which are fixed to the mounting insert 516a and which comprises an axially movable member which is connected to the engagement member 571 by means of a bearing 572a. By activation of the actuation means to drive the movable member upwardly the engagement member 571 is displaced upwardly such that the engagement means 571a are brought out of engagement with the corresponding engagement means 522a. By this means the first in- our output shaft 520 is completely disconnected from the ring gear 522 and the further gears of the gear arrangement such that it may spin freely with very little friction. Activation of the actuator means 572 for driving the movable member and thereby the engagement member in the opposite downward direction brings the engagement means 571a into engagement with the corresponding engagement 522a means on the ring gear 522 such that the ring gear is rotationally fixed relative to the first in- or output shaft whereby rotational movement and torque may be transmitted between the first 522 and second 550 in- or output shafts.

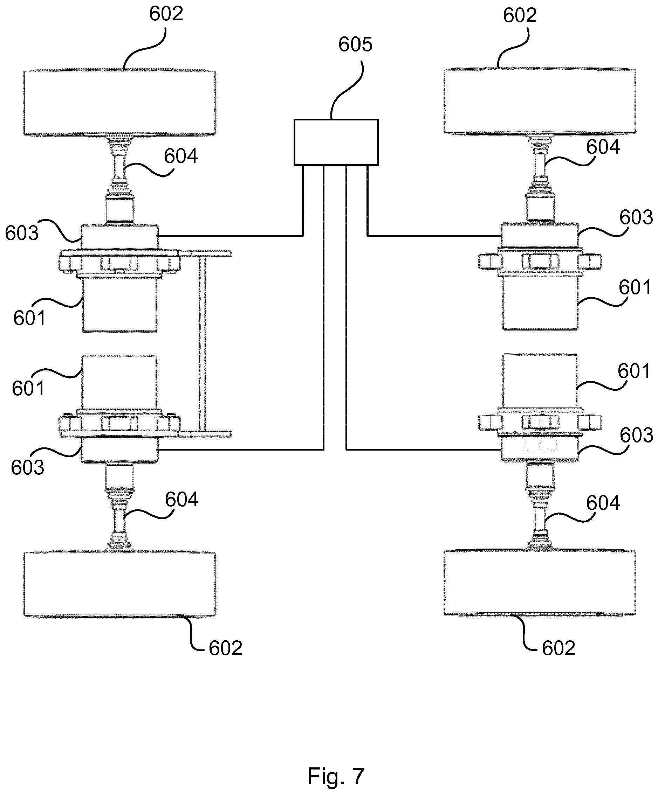

Fig. 7 illustrates schematically an electric vehicle at which four gear arrangements are used in a drive train of the vehicle. The vehicle comprises four electric motors each being connected to a respective wheel 602 by means of a respective compound planet gear arrangement 603 and a wheel axle 604. The gear arrangement may preferably be of the type illustrated in fig. 6 providing two selectable gear ratios and free wheel capability of the outgoing shaft which is connected to the wheel axle. At this application a central electronic control unit 605 is electrically connected to each of the gear arrangement for accurate control of the actuating means of the first and second clutch arrangements. The control unit 605 collects information concerning various driving conditions from numerous sensors (not shown), processes the information and sends signals to the gear arrangements 603 for optimizing for instance the gear ratio and free wheel functionality of each gear arrangement with respect to the momentarily prevailing driving conditions.

As mentioned above, compound planet gear arrangements by definition constitutes over determined systems. According to an example a gear wheel arrangement is concerned, which is capable of reducing the negative effects of such over determined systems.

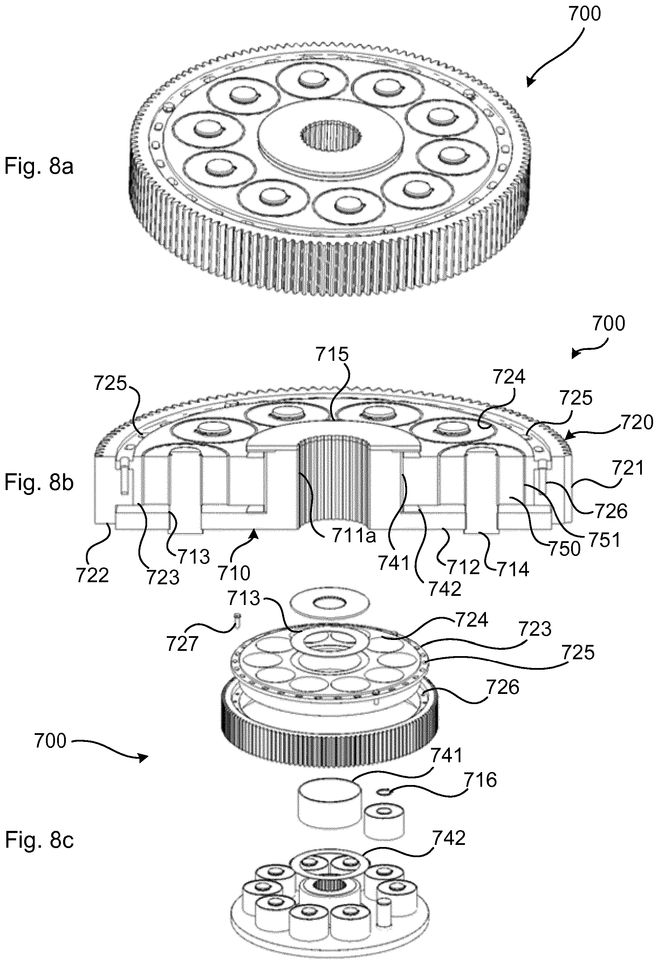

Figs. 8a-c illustrate a gear wheel arrangement 700 which may be comprised in a transmission arrangement for allowing a limited elastic relative rotation between the secondary planet teeth and the primary planet teeth in the planet gear units included in the compound planet gear arrangements described above. The gear wheel arrangement 700 comprises a first part 710 which is arranged to be rotationally fixed to a shaft (not shown) and a second part 730 which comprises peripheral gear teeth 721. Even though the gear teeth 721 shown in fig. 8a-c are straight they should according to the invention be inclined or helical.

The second 720 part is rotatable relative to the first part 710. In the shown example the first part 710 comprises a cylindrical hub 711 with an axial bore 711a provided with axial splines arranged to cooperate with corresponding axial splines on the shaft. By this means the hub 711 and the entire first part 710 is prevented from rotating relative to the shaft when mounted. The second part 710 further comprises a circular flange or disc 712 which extends radially from the hub 711. The disc 712 exhibit a number of axial through holes 713 which are distributed circumferentially around the disc 712 at a radial distance from the hub 711. Each through hole receives a cylindrical pin 714 which is fixed to the disc 712 and extends axially upwards (as seen in the figures) from the disc 712.

The second part 720 comprises an annular member 722, the outer peripheral edge of which is provided with the helical gear teeth 721. The second part also comprises a circular carrier disc 723 with a central axial bore which receives the hub 711. An number of circular axial through openings, which number is equal to the number of pins 714 are circumferentially distributed around the carrier disc 723. The through openings 724 are positioned such that each pin 714 may be centrally positioned in a respective through opening 724 by angular adjustment of the carrier disc 723 with respect to the circular disc 712. The carrier disc 723 is further, at the periphery, provide with a number of circumferentially elongated adjustment holes 725 and the annular member 722 is provided with an equal number of treaded screw holes arranged at the same radial distance from the rotational axis as the adjustment holes 726.

The first part 710 is provided with an annular stop disc 715 which is fixed to a free axial end of the hub 711. The stop disc 715 extends radially outwards from the periphery of the hubs 711 axial bore 711a such that it overlaps an inner portion of the carrier disc 723. In order to decrease the friction and enhance relative rotation between the first part 710 and the second part 720, the gear wheel arrangement comprises a number of bearings 741, 742, 743. In the shown example a cylindrical slide bearing 741 is arranged between the hub 711 and the carrier disc 723. A first annular slide bearing is arranged around the hub 711, between inner portions of the circular disc 712 and the carrier disc 723 and a second annular slide bearing 743 is arranged around the hub 711, between inner portions of the stop disc 714 and the carrier disc 723.

The first 710 and second 720 parts are connected by means of a number of elastically deformable cylindrical bushings 750. Each bushing 750 comprises an elastic material which is received in a metallic sleeve 751. Each bushing is received in a respective through opening 724 and exhibits a central axial bore which receives a respective pin 714 when the bushing is mouthed. The bushings 750 are press-fitted to the pins 714 and the through openings 724. A locking washer 716 is fixed to the free end of each pin 714 for preventing the bushing 750 to be displaced along the pin.

The axial distance between the circular disc 712 and the stop disc 715 is greater than the axial thickness of the carrier disc 723. The bushings 750 are further press- fitted to the pins 714 and in the through openings 724 such that the carrier disc 723 is positioned and maintained centrally between the circular disc 712 and the stop disc 715.

The nominal angular adjustment between the peripheral helical teeth 721 of the second part 710 and the hub 711, an thereby between the peripheral helical teeth 720 and any gear teeth arranged on a gear which is rotationally fixed relative tot the hub may be adjusted by the provision of the elongate holes 725, the screw holes 726 screws 727. Before tightening the screws, the annular member 722 is rotated such that the desired angular position of the helical gear teeth 721 relative to the hub 711, and thereby relative any gear teeth rotationally fixed in relation to the hub 711 is achieved. The elongate through holes 725 allow such angular adjustment in correspondence to the circumferential length of the holes 725. When the relative angular position is reached the screws 727 are tightened into the screw holes 726 whereby the relative angular position between the first part 710 and the second part 720 is locked

Now, if a torque is applied to the second part 720 while the first part 710 is prevented from rotating, the elastically deformable material of the bushings will be deformed thereby allowing some limited elastic rotation between the second part 720 and the first part. The gear wheel arrangement thus exhibits a certain degree of circumferential torsional compliancy.

In addition to this, the inventive gear wheel arrangement also exhibits additional circumferential torsional compliance by the fact that the peripheral gear teeth 721 are helical and that the carrier disc 723 is arranged at a certain axial distance from the circular disc 712 and the stop disc 715. Again if a torque is applied between the first 710 and second 720 parts by an adjacent gear having corresponding helical teeth meshing with the helical teeth of the first part an axial force which is proportional to the angel of inclination of the helical teeth will be applied to the second part. Since the carrier disc 723 is arranged with an axial clearance to the circular disc 712 and the stop disc 715, this axial force will tend to displace the carrier disc 723 axially upwards or downwards depending on the rotational direction f the torque and the inclination angle of the helical teeth 721. Due to the elasticity of the bushings 750, some axial displacement of the carrier disc 723 relative to the circular disc will then occur under further deformation of the bushings. While the previously described circumferential force applied to the second part causes mainly circumferential compression and stretching of the bushings 750, an axial force applied to the second part 720 will cause elastic shearing deformation of the bushings 750.

When the second part 720 is allowed to be displaced axially, the angular relation between the second part and the adjacent gear will change. Allowing relative movement between the second part 720 and the first part 710 both in the circumferential direction and the axial direction thus increases the torsional compliance of the gear wheel arrangement.

Even though the bushings are capable of elastically absorbing both circumferential relative movements and axial relative movements between the second 720 and the first 710 parts, it may at some applications be desirable to separately control the elastic resistance to relative axial movements. In such cases additional elastically deformable material (not shown) may be arranged between the circular disc 715 and the carrier disc 723 as well as between the stop disc 715 and the carrier disc 723. In addition the elasticity of the deformable material of the bushings as well as of such additional deformable material may be chosen separately thereby allowing precise control of the relative movements in the circumferential and the axial directions respectively.

When applying the inventive gear wheel arrangement to the compound planet gear arrangements described above, the gear wheel arrangement is preferably used as a secondary gear which is rotationally fixed to the planet gear shaft by means of the splined hub 711. Since a primary gear of the planet gear unit is rotationally fixed to the planet gear shaft the so arranged planet gear unit will constitute a transmission arrangement which allows a limited elastic rotation of the secondary planet teeth relative to the primary planet teeth. By this means, the negative effects of the over-determination of the compound planet gear arrangement is strongly reduced and the total load of the gear arrangement is evenly distributed between all cog flanks simultaneously in engagement. In addition the enhanced compliance of the of the gear wheel arrangement contributes to absorb intermittent torques and loads thereby providing a smooth running of the compound planet gear arrangement.

An additional advantage of applying the above described gear wheel arrangement to compound planet gear arrangements is that the use of helical gear teeth considerably reduces the noise in comparison to gear arrangement with straight gear teeth.

Fig. 8 illustrates a further embodiment of the gear wheel arrangement according to the invention. At this gear wheel arrangement 800, the first part 810 comprises a splined central hub 811 which is arranged to receive a shaft (not shown). An annular flange extends radially from the hub 811. A number of pins b14 are received in through holes 813 in the flange 812. The pins 814 extend axially on both sides of the flange 812. A first bushing 850a comprising an elastically deformable material received in a sleeve 851a is arranged on the pin at a first side of the flange 812. A second bushing 850b comprising elastically deformable material received in a sleeve 851b is arranged on the pin also at the opposite second side of the flange 812. All bushings 850a on the first side of the flange are received in through openings 824a of a first carrier disc 823a. Correspondingly, all bushings 850b on the second side of the flange 812 are received in through openings 824b of a second carrier disc 823b. The bushings 850a, 850b are press-fitted onto the respective ends of the pins 814 and into the through openings 824a, 824b. Locking washers 816a, 816b are arranged at the ends of the pins 814 for preventing the bushings 850a, 850b to come loose from the pins.

The first 823a and the second 823b carrier discs forms part of a second part 820 of the gear wheel arrangement and are fixed to a common annular member 822 which is provided with peripheral helical gear teeth 821.

In correspondence with the embodiment shown in figs. 8a-c the gear wheel arrangement 800 comprises means for adjusting the nominal relative angular position between the first part 810 and second part 820. These means comprises circumferentially elongated through holes 825a, 825b arranged in the carrier discs 823am 823b, screw holes 826a, 826b arranged in the annular member 822 and screws 827. These means are used as described above for adjusting the nominal relative angular position between the first 810 and the second 820 part.

Just as at the embodiment shown in figs. 8a-c, are the bushings 850a, 850 capable to elastically absorb both relative circumferential and axial movement between the first 810 and second 820 part and the gear wheel arrangement 800 may be applied in a similar manner to the compound gear arrangements described above. However, at this embodiment the stop ring has been omitted. Here instead the maximum axial displacement of the second part 820 relative to the first part 810 is reached when either of the carrier discs 823a, 823b has been axially displaced such that it makes contact with the flange 812.

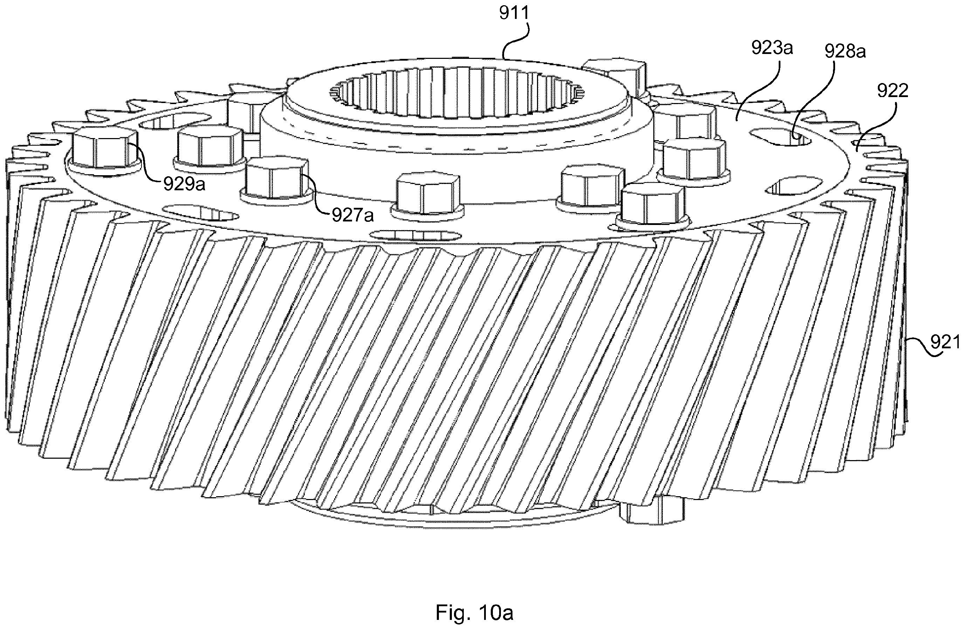

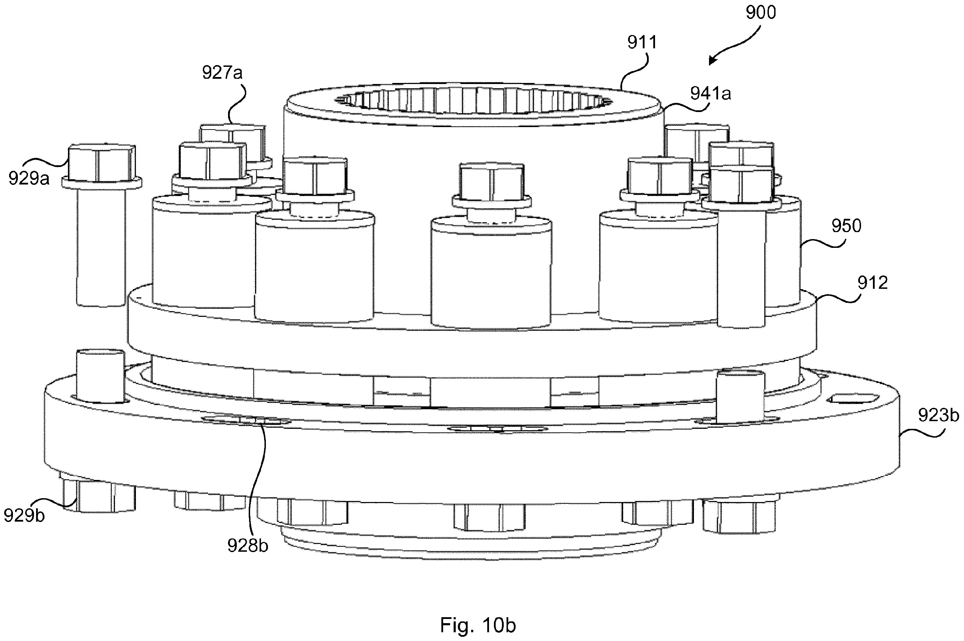

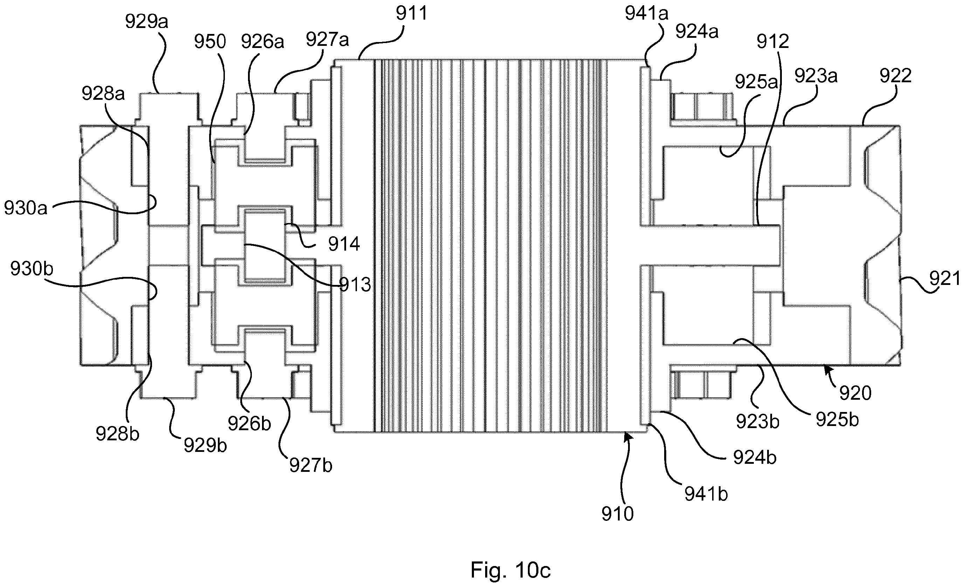

Figs 10a-c illustrates a gear wheel arrangement 900 according to a further embodiment. The gear wheel arrangement 900 comprises a first part 910 which comprises a splined central hub 911 which is arranged to receive a shaft (not shown). An annular disc or flange 912 extends radially from the hub 911. A number of axial through holes 913 are distributed in the circumferential direction of the flange 912. A stud 914 is threadedly engaged in each through opening 913 and extends axially a certain distance in each axial direction from the flange 912. The gear wheel arrangement further comprises a number of cylindrical bushings 950. The bushings 950 exhibit at each axial end a central axially extending circular recess such that a longitudinal section of the bushing is generally H-shaped. A bushing 950 is arranged at each stud 914 such that the stud 914 is received in the central recess.

The gear wheel arrangement further comprises a second part 920, which at this embodiment comprises an annular member 922 with peripheral helical teeth 921, a first carrier disc 923a and a second carrier disc 923b. The first 923a and second 923b carrier discs each comprises radially inner cylindrical sleeve portions 924a, 924b which are threaded onto the hub 911 from a respective axial end. By this means the first 923a and second 923b carrier discs are arranged at opposite sides of the flange 912. A first tubular bearing 941a is arranged between the hub 911 and the first sleeve portion 924a. A second tubular bearing 941b is arranged between the hub 911 and the second sleeve portion 924b. Both carrier discs 923a, 923b may thus be rotated about the hub 911 and axially displaced along the hub 911 at low friction. Instead of using tubular bearings many other types may also be used such as e.g. needle bearings or hydrostatic bearings.

The first 923a and second 923b carrier discs each exhibits a circumferential grove 925a, 925b which is open towards the flange 912. End portions of the bushings 950 arranged on the studs 914, which end portions faces away from the flange 912 are received in the are grooves 925a, 925b. The carrier discs 923a, 923b are provided with threaded through holes 926a, 926b which may be aligned with the studs 914. When so aligned, fixation screws 927a, 927b are fixed in the through holes 926a, 926b such that through penetrating screw portions engages the circular recesses of the bushings, which recesses are arranged at the axial end of the bushings which faces away from the flange 912.

The carrier discs 923a, 923b are finally fixed to the first part 910 by securing fixating screws 929a, 929b which extend through circumferential elongated through holes 928a, 928b arranged at the periphery of the carrier discs 923a, 923b and are threadedly engaged in fixation holes 930a 930b in the annular member 922. Before the fixation screws 929a, 929b have been fully secured, nominal angular adjustment may be accomplished by rotating the carrier discs 923a, 923b and the annular member 922 relative to the first by utilizing the circumferential extension of the through holes 928a, 928b.

It should de noted that the axial height of the bushings 950 is greater than the axial distance between the flange 915 and the bottom of the grooves 925a, 925b. This allows for that the bushings are axially pretensioned by tightening the fixation screws 929a, 929b.

As readily understood, the tubular bearings 941a, 941 allows for that the second part may be moved both rotationally and axially relative to the first par at low friction.

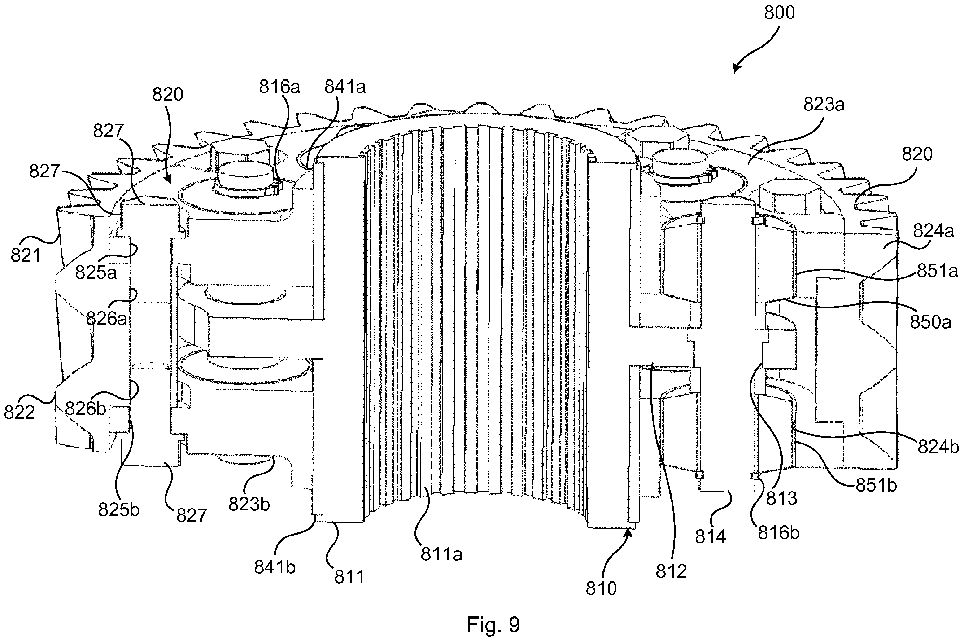

Just as at the embodiments shown in figs. 8a-c and 9, are the bushings 950 capable to elastically absorb both relative circumferential and axial movement between the first 910 and second 920 part and the gear wheel arrangement 900 may be applied in a similar manner to the compound gear arrangements described above.

Above certain exemplifying embodiments of the invention has been described. The invention is however not limited to these embodiments but it is defined by the appended claims.

## Claims

1. A gear wheel arrangement (700, 800, 900), comprising;
- a first part (710, 810, 910) which is arranged to be rotationally fixed to a shaft;
- a second part (720, 820, 920) which is rotatably connected to the fist part and provided with gear teeth for meshing with an adjacent gear;
wherein the first and second parts are mechanically connected by means of at least one first elastically deformable member (750, 850, 950) which allows a limited relative rotation between the first and second part, wherein
the gear teeth (721, 821, 921) of the second part (720, 820, 920) are helical and that the gear wheel arrangement is arranged to allow a limited relative axial displacement between the first part and the second part **characterized in that** the gear wheel arrangement comprises at least one bearing (741, 841a, 841b, 941a, 941b) arranged between the first part (710, 810, 910) and the second part (720, 820, 920) for reducing the friction between the first and second part during relative rotation.

2. A gear wheel arrangement according to claim 1, comprising at least one first elastically deformable member (750, 850, 950) which is deformed during relative rotational displacement between the first part (710, 810, 910) and the second part (720, 820, 910).

3. A gear wheel arrangement according the claim 1 or 2, wherein said at least one first elastically deformable member (750, 850, 950) is arranged to be deformed during relative axial displacement between the first part (710, 810, 910) and the second (720, 820, 920) part.

4. A gear wheel arrangement according to any of claims 1-3, comprising at least one second elastically deformable member, which is arranged to be deformed during relative axial displacement between the first part and the second part.

5. A gear wheel arrangement according to any of claims 1-4 wherein the first part (710, 810, 910) comprises a central hub (711, 811, 911) with an axial bore (711a, 811a) for receiving the shaft and at least one first contact member (714, 814, 914) which is arranged at a radial distance from a central axis of the hub; wherein the second part (720, 820, 920) comprises a annular toothed member (722, 822, 922) with peripheral helical teeth (721, 821, 921) and at least one second contact member (724, 824a, 824b, 927a, 927b); and wherein an elastically deformable member (750, 850a, 850b, 950) is arranged between said first and second contact members.

6. A gear wheel arrangement according to claim 5, wherein the first part (710, 810) comprises a radial disc (712, 812) which extends radially from the hub (711, 811) and which carries a number of first contact members (714, 814) extending axially from the radial disc, wherein the second part comprises at least one carrier disc (723, 823a, 823b) which is fixed to the toothed member (722, 822) and which exhibits a corresponding number of recesses (724, 824a, 824b); and wherein an annular elastically deformable member (750, 850) is received in each recess and about each first contact member.

7. A gear wheel arrangement according to claim 6, the second part (820) comprises two carrier discs (823a, 823b) arranged at opposite axial sides of the radial disc (812).

8. A gear wheel arrangement according to any of claims 1-7, comprising adjustment means f(725, 726, 727, 825, 826, 827, 928a, 928b, 929a, 929b, 939a, 930b) or adjusting the nominal relative rotational position between the gear teeth (721, 821, 921) of the second part (720, 820, 929) and the shaft.

9. A gear wheel arrangement according to any of claims 2-8, wherein said at least one first elastically deformable member (750, 850a, 850b, 950) comprises a polymer material.

10. A gear wheel arrangement according to any of claims 2-8, wherein said at least one first elastically deformable member comprises a torsional spring.

## Patentansprüche

1. Zahnradanordnung (700, 800, 900), umfassend:
- einen ersten Teil (710, 810, 910), welcher eingerichtet ist, um drehbar an einer Welle befestigt zu werden;
- einen zweiten Teil (720, 820, 920), welcher drehbar mit dem ersten Teil verbunden ist und mit Zahnradzähnen zum Kämmen mit einem benachbarten Zahnrad versehen ist;
wobei der erste und der zweite Teil durch mindestens ein erstes elastisch verformbares Glied (750, 850, 950) mechanisch verbunden sind, welches eine eingeschränkte relative Drehung zwischen dem ersten und dem zweiten Teil erlaubt, wobei die Zahnradzahnräder (721, 821, 921) des zweiten Teils (720, 820, 920) schraubenförmig sind und die Zahnradanordnung eingerichtet ist, um eine eingeschränkte relative axiale Verschiebung zwischen dem ersten Teil und dem zweiten Teil zu erlauben,
**dadurch gekennzeichnet, dass** die Zahnradanordnung mindestens ein Lager (741, 841a, 841b, 941a, 941b) umfasst, das zwischen dem ersten Teil (710, 810, 910) und dem zweiten Teil (720, 820, 920) zum Verringern der Reibung zwischen dem ersten und dem zweiten Teil während der relativen Drehung angeordnet ist.

2. Zahnradanordnung nach Anspruch 1, umfassend mindestens ein erstes elastisch verformbares Glied (750, 850, 950), welches während der relativen Drehverschiebung zwischen dem ersten Teil (710, 810, 910) und dem zweiten Teil (720, 820, 910) verformt wird.

3. Zahnradanordnung nach Anspruch 1 oder 2, wobei das mindestens eine erste elastisch verformbare Glied (750, 850, 950) eingerichtet ist, um während der relativen axialen Verschiebung zwischen dem ersten Teil (710, 810, 910) und dem zweiten Teil (720, 820, 920) verformt zu werden.

4. Zahnradanordnung nach einem der Ansprüche 1 - 3, umfassend mindestens ein zweites elastisch verformbares Glied, welches eingerichtet ist, um während der relativen axialen Verschiebung zwischen dem ersten Teil und dem zweiten Teil verformt zu werden.

5. Zahnradanordnung nach einem der Ansprüche 1 - 4, wobei der erste Teil (710, 810, 910) eine zentrale Nabe (711, 811, 911) mit einem axialen Bohrloch (711a, 811a) zum Aufnehmen der Welle und mindestens einem ersten Kontaktglied (714, 814, 914), welches in einem radialen Abstand von einer zentralen Achse der Nabe angeordnet ist, umfasst; wobei der zweite Teil (720, 820, 920) ein ringförmiges gezahntes Glied (722, 822, 922) mit Umfangsschrägverzahnungen (721, 821, 921) und mindestens einem zweiten Kontaktglied (724, 824a, 824b, 927a, 927b) umfasst; und wobei ein elastisch verformbares Glied (750, 850a, 850b, 950) zwischen dem ersten und dem zweiten Kontaktglied angeordnet ist.

6. Zahnradanordnung nach Anspruch 5, wobei der erste Teil (710, 810) eine radiale Scheibe (712, 812) umfasst, welche sich radial von der Nabe (711, 811) erstreckt und welche eine Anzahl an ersten Kontaktgliedern (714, 814) trägt, die sich axial von der radialen Scheibe erstrecken, wobei der zweite Teil mindestens eine Trägerscheibe (723, 823a, 823b) umfasst, welche an dem gezahnten Glied (722, 822) befestigt ist und welche eine entsprechende Anzahl an Aussparungen (724, 824a, 824b) aufweist; und wobei ein ringförmiges elastisch verformbares Glied (750, 850) in jeder Aussparung und um jedes erste Kontaktglied herum aufgenommen ist.

7. Zahnradanordnung nach Anspruch 6, wobei der zweite Teil (820) zwei Trägerscheiben (823a, 823b) umfasst, die auf gegenüberliegenden axialen Seiten der radialen Scheibe (812) angeordnet sind.

8. Zahnradanordnung nach einem der Ansprüche 1 - 7, umfassend Stellmittel (725, 726, 727, 825, 826, 827, 928a, 928b, 929a, 929b, 939a, 930b) zum Einstellen der relativen Drehsollposition zwischen den Zahnrädern (721, 821, 921) des zweiten Teils (720, 820, 920) und der Welle.

9. Zahnradanordnung nach einem der Ansprüche 2 - 8, wobei das mindestens eine erste elastisch verformbare Glied (750, 850a, 850b, 950) ein Polymermaterial umfasst.

10. Zahnradanordnung nach einem der Ansprüche 2 - 8, wobei das mindestens eine erste elastisch verformbare Glied eine Drehfeder umfasst.

## Revendications

1. Agencement de roue d'engrenage (700, 800, 900) comprenant :
- une première partie (710, 810, 910) étudiée pour être fixée en rotation à un arbre ;
- une deuxième partie (720, 820, 920) reliée de manière rotative à la première partie et dotée de dents d'engrenage pour l'engrènement avec un engrenage adjacent ;
dans lequel les première et deuxième parties sont reliées mécaniquement au moyen d'au moins un premier élément déformable élastiquement (750, 850, 950) qui permet une rotation relative limitée entre la première et la deuxième partie, dans lequel les dents d'engrenage (721, 821, 921) de la deuxième partie (720, 820, 920) sont hélicoïdales et l'agencement de roue d'engrenage est étudié pour permettre un déplacement axial relatif limité entre la première partie et la deuxième partie,
**caractérisé en ce que** l'agencement de roue d'engrenage comprend au moins un roulement (741, 841a, 841b, 941a, 941b) disposé entre la première partie (710, 810, 910) et la deuxième partie (720, 820, 920) pour réduire la friction entre les première et deuxième parties pendant la rotation relative.

2. Agencement de roue d'engrenage selon la revendication 1, comprenant au moins un premier élément déformable élastiquement (750, 850, 950) qui est déformé pendant un déplacement rotatif relatif entre la première partie (710, 810, 910) et la deuxième partie (720, 820, 910).

3. Agencement de roue d'engrenage selon la revendication 1 ou 2, dans lequel ledit au moins un premier élément déformable élastiquement (750, 850, 950) est étudié pour être déformé pendant un déplacement axial relatif entre la première partie (710, 810, 910) et la deuxième partie (720, 820, 920).

4. Agencement de roue d'engrenage selon l'une quelconque des revendication 1-3, comprenant au moins un deuxième élément déformable élastiquement qui est étudié pour être déformé pendant un déplacement axial relatif entre la première partie et la deuxième partie.

5. Agencement de roue d'engrenage selon l'une quelconque des revendications 1-4, dans lequel la première partie (710, 810, 910) comprend un moyeu central (711, 811, 911) avec un alésage axial (711a, 811a) pour recevoir l'arbre et au moins un premier élément de contact (714, 814, 914) disposé à une distance radiale d'un axe central du moyeu ; dans lequel la deuxième partie (720, 820, 920) comprend un élément denté annulaire (722, 822, 922) avec des dents hélicoïdales périphériques (721, 821, 921) et au moins un deuxième élément de contact (724, 824a, 824b, 927a, 927b) ; et dans lequel un élément déformable élastiquement (750, 850a, 850b, 950) est disposé entre lesdits premier et deuxième éléments de contact.

6. Agencement de roue d'engrenage selon la revendication 5, dans lequel la première partie (710, 810) comprend un disque radial (712, 812) qui s'étend radialement à partir du moyeu (711, 811) et qui porte un certain nombre de premiers éléments de contact (714, 814) s'étendant axialement au disque radial, dans lequel la deuxième partie comprend au moins un disque porteur (723, 823a, 823b) qui est fixé à l'élément denté (722, 822) et qui présente un nombre correspondant de creux (724, 824a, 824b) ; et dans lequel un élément déformable élastiquement annulaire (750, 850) est réceptionné dans chaque creux et autour de chaque premier élément de contact.

7. Agencement de roue d'engrenage selon la revendication 6, la deuxième partie (820) comprenant deux disques porteurs (823a, 823b) disposés sur des côtés axiaux opposés du disque radial (812).

8. Agencement de roue d'engrenage selon l'une quelconque des revendications 1-7, comprenant des moyens de réglage (725, 726, 727, 825, 826, 827, 928a, 928b, 929a, 929b, 939a, 930b) pour régler la position de rotation relative nominale entre les dents d'engrenage (721, 821, 921) de la deuxième partie (720, 820, 929) et l'arbre.

9. Agencement de roue d'engrenage selon l'une quelconque des revendications 2-8, dans lequel ledit au moins un premier élément déformable élastiquement (750, 850a, 850b, 950) comprend un matériau polymère.

10. Agencement de roue d'engrenage selon l'une quelconque des revendications 2-8, dans lequel ledit au moins un premier élément déformable élastiquement comprend un ressort de torsion.
